# EUROPÄISCHE PATENTSCHRIFT

(11) **EP 2 119 525 B1**
(45) Veröffentlichungstag und Bekanntmachung des Hinweises auf die Patenterteilung: **19.01.2011**
(21) Anmeldenummer: 09159650.2
(22) Anmeldetag: 07.05.2009
(51) Int. Cl.: B23K 1/00, B23K 1/005

(54) **Verfahren zur Herstellung einer Blisk**
Method for the production of a blisk
Procédé de fabrication d'un Blisk

(30) Priorität: 15.05.2008 DE 102008023755
(43) Veröffentlichungstag der Anmeldung: 18.11.2009
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE); Mohnkopf, Hermann, 15834 Rangsdorf (DE)

(56) Entgegenhaltungen:
- EP-A1- 1 894 658
- US-A- 5 873 703
- US-A1- 2008 003 453
- US-B1- 6 269 540

## Beschreibung

Die Erfindung betrifft ein Verfahren zur Herstellung einer Blisk für den Hochdruckkompressor oder die Niederdruckturbine eines Gasturbinentriebwerks, bei dem vorgefertigte Schaufeln in einem Fügeprozess mit einer vorgefertigten Rotorscheibe stoffschlüssig verbunden werden (siehe EP-A-1 894 658).

Im Triebwerksbau eingesetzte - auch als Blisk bezeichnete - Rotoren mit integraler Beschaufelung zeichnen sich gegenüber herkömmlichen Rotoren mit an der Rotorscheibe lösbar befestigten Schaufeln durch ein geringeres Gewicht und eine höhere mechanische Belastbarkeit sowie eine optimale Strömungsführung und einen hohen Wirkungsgrad aus.

Die Herstellung von in Blisk-Bauweise ausgebildeten Rotoren erfolgt bekanntermaßen durch Fräsen aus dem vollen Material. Das Fräsen der Schaufeln aus einem Schaufelrohling bietet zwar vielfältige Gestaltungsmöglichkeiten, erfordert aber einen sehr hohen Arbeits- und Materialaufwand. Zudem ist eine Werkstoffauswahl, die der unterschiedlichen mechanischen und thermischen Belastung im Scheibenbereich und im Schaufelbereich Rechnung trägt, nicht oder nur eingeschränkt möglich.

Darüber hinaus können integral beschaufelte Rotoren auch in der Weise hergestellt werden, dass separat gefertigte Scheiben und Schaufeln in einem Fügeverfahren, das heißt in einem Schweißprozess, stoffschlüssig miteinander verbunden werden. Die beispielsweise in der US 6 219 916 oder der EP 1 535 692 beschriebene Herstellung von Blisks durch lineares Reibschweißen ist an ein bestimmtes Bauteildesign und groß dimensionierte Schaufeln gebunden und erfordert zudem eine aufwändige Vorrichtungskonzeption. Eine durch herkömmliches Schmelzschweißen erzeugte Verbindung zwischen der Rotorscheibe und den Schaufeln ist insofern nachteilig, als wegen der Rissanfälligkeit im Schweißnahtbereich die erforderlichen Festigkeitseigenschaften und eine lange Lebensdauer der Blisk nicht gewährleistet sind.

Zudem ist es bei den bekannten Fügeverfahren erforderlich, dass die Rotorscheibe und die Schaufeln aus dem gleichen Material oder zumindest aus artgleichen Werkstoffen bestehen, um die notwendigen Festigkeitseigenschaften im Schweißnahtbereich zu erreichen. Tatsächlich sind jedoch die Anforderungen an die Eigenschaften der Schaufeln und der Scheibe sehr unterschiedlich, da die Schaufeln einer Langzeitmaterialermüdung (HCF = High Cycle Fatigue) und einer Erosionsbelastung unterliegen und zudem thermisch höher belastet sind, während an das Scheibenmaterial höhere Anforderungen hinsichtlich der Kurzzeitschwingfestigkeit (LCF = Low Cycle Fatigue)) und der Kriechfestigkeit gestellt werden. Eine Verbindung von Schaufeln und Scheiben aus unterschiedlichen Werkstoffklassen mit derart unterschiedlichen Eigenschafen ist wegen der nicht ausreichenden Festigkeitseigenschaften an der Verbindungsstelle mit den herkömmlichen Schweißverfahren nicht realisierbar.

Der Erfindung liegt die Aufgabe zugrunde, ein Verfahren der eingangs erwähnten Art zur Herstellung integral beschaufelter Rotoren für ein Gasturbinentriebwerk anzugeben, das die jeweils im Scheiben- und im Schaufelbereich sowie im Fügebereich erforderlichen mechanischen und thermischen Eigenschaften sowie eine lange Lebensdauer der Blisk gewährleistet.

Erfindungsgemäß wird die Aufgabe mit einem Verfahren gemäß den Merkmalen des Patentanspruchs 1 gelöst. Zweckmäßige Ausgestaltungen der Erfindung sind Gegenstand der Unteransprüche.

Der Grundgedanke der Erfindung besteht darin, dass eine vorgefertigte, aus einem Nickel- oder Titanbasiswerkstoff bestehende Rotorscheibe mit aus einem Titanaluminid bestehenden Schaufeln durch Laserlöten verbunden wird. Das Lot ist ein pulverförmiges Material auf Nickel-, Eisen- oder Kupferbasis. Durch den Laserstrahl wird nur der in diesen eingebrachte Lötpulverstrahl erwärmt und aufgeschmolzen, während insbesondere die Schaufel gegenüber dem Laserstrahl durch den Pulverstrom abgeschirmt ist. Die Erwärmung der Fügepartner erfolgt an der Verbindungsstelle durch die Lötschmelze, und zwar in Abhängigkeit von dem durch die Größe des Lötspaltes bestimmten Volumen der Lötschmelze und der Schmelztemperatur des Lötmaterials. Das Lötpulver bzw. dessen Schmelztemperatur und die Größe des Lötschmelzbades werden in Abhängigkeit vom Scheiben- und Schaufelwerkstoff so gewählt, dass das Scheibenmaterial im Fügebereich angeschmolzen wird und mit dem artgleichen Lotmaterial eine Legierung bildet, während das Schaufelmaterial nicht angeschmolzen wird und die Verbindung mit dem erstarrenden, nicht artgleichen Lot durch Adhäsionskräfte bewirkt wird.

Eine auf diese Art hergestellte Blisk ist im Scheiben-und im Schaufelbereich entsprechend den jeweiligen mechanischen und thermischen Belastungsverhältnissen ausgebildet. Aufgrund des durch das Titanaluminid geringen Schaufelgewichts sind die an der Fügestelle wirksamen Fliehkräfte und damit die mechanische Belastung in diesem Bereich vergleichsweise gering, so dass eine lange Lebensdauer der mit vergleichsweise geringem Arbeits- und Materialaufwand hergestellten Blisk gewährleistet ist.

Die Schmelztemperatur des Lötpulvers wird durch das gewählte Nickelbasismaterial und einen diesem gegebenenfalls hinzugefügten Zusatz zur Senkung der Schmelztemperatur bestimmt. Das Volumen der Schmelze, deren Wärmekapazität ebenfalls auf die beiden Fügepartner wirkt und deren Erwärmung sowie die Ausbildung der jeweiligen Verbindung beeinflusst, ist durch die Form und Größe des Lötspaltes definiert. Vorzugsweise ist der Lötspalt an der Wurzel offen und dessen Breite entspricht etwa der halben Lötspalttiefe.

In Ausgestaltung der Erfindung wird zum Absenken der Schmelztemperatur des Lötpulvers vorzugsweise ein Borzusatz verwendet.

In weiterer Ausbildung der Erfindung hat das als Lot eingesetzte Nickelbasismaterial eine größere Duktilität als das Nickelbasismaterial der Rotorscheibe. Aufgrund der guten Duktilität des Lötmaterials, das beim Erstarren eine geringere Festigkeit als das Titanaluminid hat, werden beim Erstarren des aufgeschmolzenen Lotes nur geringe Kräfte in das Schaufelmaterial eingeleitet. Durch das Erstarren des Lotes hervorgerufene mechanische und thermische Spannungen im Schaufelmaterial werden so verringert bzw. von dem Lot aufgenommen.

In weiterer Ausgestaltung der Erfindung werden die Schaufeln an am Scheibenumfang angeformten Schaufelstümpfen angebracht, um eine unmittelbare Kerbwirkung an der Scheibe und die dabei auftretenden Spannungen zu verhindern.

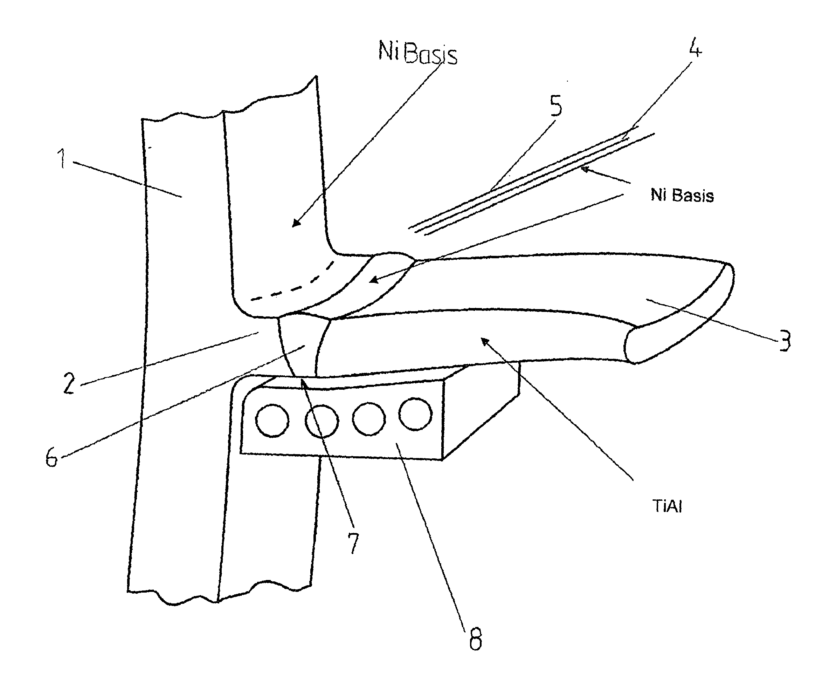

Ein Ausführungsbeispiel der Erfindung wird nachfolgend anhand der Zeichnung, in deren einziger Figur eine Teilansicht einer Rotorscheibe mit an einem Schaufelstumpf durch Laserlöten befestigter Schaufel dargestellt ist, näher erläutert.

Die Rotorscheibe 1 besteht aus einer auch bei hohen Temperaturen kriech- und ermüdungsfesten Nickelbasislegierung, hier beispielsweise IN 718, und weist arm Scheibenumfang kleine Schaufelstümpfe 2 auf, über die die Schaufeln 3 mit der Rotorscheibe 1 verbunden werden sollen. Die Schaufeln 3 bestehen aus γ-Titanaluminid, das heißt einer intermetallischen Verbindung aus Titan und Aluminium. Gegenüber dem Scheibenmaterial auf Nickelbasis zeichnet sich das Titanaluminid durch ein deutlich geringeres Gewicht sowie durch eine höhere Temperaturbeständigkeit und trotz der geringen Dichte guten Festigkeits- und Steifigkeitseigenschaften aus. Die Verbindung zwischen den am Scheibenumfang vorgesehenen Schaufelstümpfen 2 und der jeweiligen Schaufel 3 erfolgt durch Laserlöten, das heißt mit einem in einen Laserstrahl 4 eingeblasenen und bei ca. 1400°C geschmolzenen Lötpulverstrahl 5 auf Nickelbasis. Der Laserstrahl 4 wirkt nur auf das Lötpulver und schmilzt dieses auf, während das Titanaluminid durch den Lötpulverstrahl 5 gegenüber der Wärmeeinwirkung des Laserstrahls 4 abgeschirmt ist. Das Lotmaterial, dessen Duktilität höher als die des Scheibenwerkstoffs sein kann und dessen Schmelzpunkt durch einen Borzusatz herabgesetzt sein kann, hat beim Erstarren eine geringere Festigkeit als das Titanaluminid. Die beim Erstarren auftretenden Kräfte und Wärmespannungen werden von dem Lotmaterial aufgenommen, so dass nur geringe Kräfte in das Titanaluminid eingeleitet und in diesem nur geringe Spannungen erzeugt werden und das Titanaluminid letztlich durch die von dem Lötmaterial ausgehenden Kraft- und Wärmewirkungen nicht beeinträchtigt wird. Während des Lötprozesses wird die in die beiden Fügepartner 2, 3 eingebrachte Wärme über die Schmelzpunkteinstellung des Lotes und die über die Lotmaterialzufuhr und Lötnahtabmessungen bestimmte Lötschmelzbadmenge so reguliert, dass im Fügebereich der Nickelbasiswerkstoff des Schaufelstumpfes 2 an der Rotorscheibe 1 angeschmolzen wird und eine Legierungsbildung mit dem geschmolzenen Lötmaterial erfolgt, während das Titanaluminid der Schaufel 3 nicht angeschmolzen wird und hier nur die für eine feste Verbindung erforderlichen Adhäsionskräfte zwischen dem erstarrten Lötmaterial und dem nicht aufgeschmolzenen Titanaluminid erreicht werden. Das heißt, während zwischen den artgleichen Nickelbasiswerkstoffen der Rotorscheibe 1 mit angeformten Schaufelstumpf 2 und des Lotes eine Legierungsbildung erfolgt, wird die Bildung einer - spröden und zum Abbrechen der Schaufeln 3 führenden - Legierung aus dem Titanaluminid und dem Lötmaterial ausdrücklich vermieden. Die für die Wärmesteuerung bzw. Temperatureinstellung im Fügebereich vorgesehene Lötbadmenge wird über die Größe der Lötnaht 6 (des Lötspaltes) eingestellt, deren Nahtbreite etwa der Hälfte der Nahttiefe entspricht und die eine bestimmte Wurzelöffnung 7 aufweist. Das Lötschmelzbad wird unterhalb der Wurzelöffnung 7 durch eine aus Kupfer bestehende wassergekühlte Lötbadstütze 8 gesichert. Durch die Verbindung der Schaufeln 3 mit am Scheibenumfang vorgesehenen Schaufelstümpfen 2 wird die Ausbildung von Kerben unmittelbar in der Rotorscheibe 1 und die Erzeugung entsprechender Spannungen verhindert.

### Bezugszeichenliste

- 1: Rotorscheibe
- 2: Schaufelstumpf
- 3: Schaufel
- 4: Laserstrahl
- 5: Lötpulverstrahl
- 6: Lötnaht
- 7: Wurzelöffnung
- 8: Lötbadstütze

## Patentansprüche

1. Verfahren zur Herstellung einer Blisk für den Hochdruckkompressor oder die Niederdruckturbine eines Gasturbinentriebwerks, bei dem vorgefertigte Schaufeln (3) in einem Fügeprozess mit einer vorgefertigten Rotorscheibe (1) stoffschlüssig verbunden werden, **dadurch gekennzeichnet, dass** eine aus einem Nickel- oder Titanbasiswerkstoff bestehende Rotorscheibe (1) durch Laserlöten unter Verwendung eines Lötmaterials auf Nickel-, Eisen-oder Kupferbasis mit aus einem Titanaluminid bestehenden Schaufeln (3) verbunden wird, wobei die Erwärmung der Fügepartner über die Schmelztemperatur des Lötmaterials und die Lötschmelzbadmenge so geregelt wird, dass das Scheibenmaterial angeschmolzen und mit dem artgleichen Lötmaterial durch Legierungbildung verbunden wird, während das Schaufelmaterial nicht angeschmolzen wird und durch Adhäsion mit dem Lötmaterial verbunden wird.

2. Verfahren nach Anspruch 1, **dadurch gekennzeichnet, dass** die Lötschmelze durch einen in einen Laserstrahl (4) eingebrachten Lötpulverstrom (5), der zumindest die Schaufel (3) aus Aluminiumnitrid gegenüber dem Laserstrahl (4) abschirmt, erzeugt wird und durch den Laserstrahl (4) nur das Lötmaterial erwärmt und aufgeschmolzen wird.

3. Verfahren nach Anspruch 1, **dadurch gekennzeichnet, dass** zur Einstellung der Lötschmelzbadmenge die Breite der Lötfuge variabel ist.

4. Verfahren nach Anspruch 3, **dadurch gekennzeichnet, dass** die Lötfuge an der Wurzel offen ist und etwa halb so breit wie tief ist.

5. Verfahren nach Anspruch 4, **dadurch** gekenntzeichnet, dass das Lötschmelzbad mittels einer wassergekühlten Lötbadstütze (8) gekühlt wird.

6. Verfahren nach Anspruch 1, **dadurch gekennzeichnet, dass** die Duktilität des Lötmaterials größer als die des artgleichen Scheibenmaterials ist

7. Verfahren nach Anspruch 1, **dadurch gekennzeichnet, dass** die Schmelztemperatur des Lötmaterials durch einen Zusatz herabgesetzt wird.

8. Verfahren nach Anspruch 7, **dadurch gekennzeichnet, dass** der den Schmelzpunkt senkende Zusatz Bor ist.

9. Verfahren nach Anspruch 1, **dadurch gekennzeichnet, dass** die Schaufeln zur Vermeidung von Herbspannungen mit am Scheibenumfang angeformten Schaufelstümpfen verlötet werden.

## Claims

1. Method for the manufacture of a blisk for the high-pressure compressor or the low-pressure turbine of a gas-turbine engine, in which pre-manufactured blades (3) are connected to a pre-manufactured rotor disk (1) in a joining process by positive-substance joining, **characterized in that** a rotor disk (1) made of a nickel or titanium-base material is joined to blades (3) made of a titanium aluminide by way of laser brazing using a brazing metal on nickel, iron or copper base, with the heating of the members to be joined being controlled via the melting temperature of the brazing metal and the volume of the molten metal bath such that the disk material is molten and alloys with the similar brazing metal, while the blade material is not molten and the connection with the brazing metal is made by adhesion.

2. Method in accordance with Claim 1, **characterized in that** the molten brazing metal is generated by a brazing powder jet (5) introduced into a laser beam (4), with the brazing powder jet (5) shielding at least the blade (3) made of aluminium nitride against the laser beam (4), and only the brazing metal is heated and molten by the laser beam (4).

3. Method in accordance with Claim 1, **characterized in that** the width of the brazing gap is variable for setting the volume of the molten metal bath.

4. Method in accordance with Claim 3, **characterized in that** the brazing gap is open at the root and has a width which corresponds to approximately half the depth of the brazing gap.

5. Method in accordance with Claim 4, **characterized in that** the molten metal bath is cooled by means of a water-cooled bath support (8).

6. Method in accordance with Claim 1, **characterized in that** the ductility of the brazing metal is higher than the ductility of the similar disk material.

7. Method in accordance with Claim 1, **characterized in that** the melting temperature of the brazing metal is lowered by an addition.

8. Method in accordance with Claim 7, **characterized in that** the addition lowering the melting point is boron.

9. Method in accordance with Claim 1, **characterized in that** the blades are brazed to blade stubs formed on the periphery of the disk to avoid stresses induced by notch effects.

## Revendications

1. Procédé pour fabriquer un disque BLISK pour le compresseur haute pression ou la turbine basse pression d'un moteur à turbine à gaz, dans lequel des aubes (3) préfabriquées sont reliées par liaison positive de matière à un disque de rotor (1) préfabriqué, lors d'une opération d'assemblage, **caractérisé en ce qu'**un disque de rotor (1) constitué d'un matériau à base de nickel ou de titane est relié à des aubes (3) constituées d'un aluminiure de titane par brasage au laser en mettant en oeuvre un matériau de brasage à base de nickel, de fer ou de cuivre, sachant que l'échauffement des pièces à assembler est réglé en fonction de la température de fusion du matériau de brasage et de la quantité de bain de brasure fondue de manière telle que le matériau de disque est fondu et relié au matériau de brasage de même nature par formation d'alliage, alors que le matériau d'aube n'est pas fondu et est relié au matériau de brasage par adhésion.

2. Procédé selon la revendication n° 1, **caractérisé en ce que** la brasure fondue est générée par un flux de poudre à braser (5) introduit dans un rayon laser (4) et qui protège au moins l'aube (3) en nitrure d'aluminium contre le rayon laser (4), et que seul le matériau de brasage est échauffé et fondu par le rayon laser (4).

3. Procédé selon la revendication n° 1, **caractérisé en ce que** la largeur du joint de brasage est variable pour régler la quantité de bain de brasure fondue.

4. Procédé selon la revendication n° 3, **caractérisé en ce que** le joint de brasage est ouvert à la racine et environ deux fois moins large que profond.

5. Procédé selon la revendication n° 4, **caractérisé en ce que** le bain de brasure fondue est refroidi au moyen d'un support de bain de brasage (8) refroidi par eau.

6. Procédé selon la revendication n° 1, **caractérisé en ce que** la ductilité du matériau de brasage est supérieure à celle du matériau de disque de même nature.

7. Procédé selon la revendication n° 1, **caractérisé en ce que** la température de fusion du matériau de brasage est abaissée par un additif.

8. Procédé selon la revendication n° 7, **caractérisé en ce que** l'additif abaissant le point de fusion est du bore.

9. Procédé selon la revendication n° 1, **caractérisé en ce que** pour éviter des tensions d'entaille, les aubes sont brasées avec des moignons d'aube formés sur le pourtour du disque.
